# EUROPEAN PATENT APPLICATION

(11) **EP 2 600 506 A2**
(43) Date of publication of application: **05.06.2013**
(21) Application number: 12194350.0
(22) Date of filing: 27.11.2012
(51) Int. Cl.: H02K 15/02

(54) **Method for manufacturing stator for motor and stator for motor**

(30) Priority: 30.11.2011 JP 2011261353
(71) Applicant: JTEKT CORPORATION, Osaka-shi Osaka 542-8502 (JP)
(72) Inventor: Nagahama, Takaya, Osaka-shi, Osaka 542-8502 (JP); Naka, Masami, Osaka-shi, Osaka 542-8502 (JP); Shibata, Yoshiyuki, Osaka-shi, Osaka 542-8502 (JP); Nagase, Shigeki, Osaka-shi, Osaka 542-8502 (JP); Kageyama, Takashi, Osaka-shi, Osaka 542-8502 (JP)
(74) Representative: TBK

(57) **Abstract**

Teeth coupling portions (22) of a ring-shaped teeth member (2) are demagnetized by supplying a nonmagnetic element to the teeth coupling portions (22) while melting the teeth coupling portion (22) by application of heat. Then, an inner peripheral portion of the ring-shaped teeth member (2) is pressed radially outward. Therefore, it is possible to plastically deform the teeth coupling portions (22) easily, so that the ring-shaped teeth member (2) and a ring-shaped yoke member (3) are easily fitted together. Accordingly, there is provided a method for manufacturing a stator for a motor, in which the amount of leakage flux is reduced and which has favorable magnetic characteristics.

## Description

### BACKGROUND OF THE INVENTION

### Field of the Invention

The invention relates to a method for manufacturing a stator for a motor and a stator for a motor.

### Description of Related Art

For example, Japanese Patent Application Publication No. 2-307339 (JP 2-307339 A) describes a motor that includes a stator formed of a ring-shaped teeth member and a ring-shaped yoke member that are prepared separately. To form the stator, coils are wound around the teeth of the ring-shaped teeth member, and then the ring-shaped teeth member and the ring-shaped yoke member are fitted together through fitting assembly. Because the stator is formed of the ring-shaped teeth member and the ring-shaped yoke member that are prepared separately, it is possible to easily wind the coils around the teeth. In addition, the teeth are coupled to each other via teeth coupling portions. It is desirable that each teeth coupling portion have a width large enough to ensure a predetermined mechanical strength. However, if the width of the teeth coupling portion is too large, a so-called magnetic path is formed and therefore a magnetic flux decreases. As a result, the motor characteristics deteriorate. Therefore, a portion with an increased magnetic resistance is formed near the center of each teeth coupling portion. In this way, formation of a magnetic path is suppressed.

To manufacture the stator for a motor described in JP 2-307339 A, the ring-shaped teeth member and the ring-shaped yoke member need to be fitted together through fitting assembly. However, with the processing accuracy of the press working, it is conventionally difficult to perform fitting assembly. Therefore, it is not easy to manufacture the motor having the above-described configuration. In order to increase the magnetic resistance, there have been employed the following methods such as a method of changing the crystalline orientation through laser irradiation such that the micro-magnetic domain is perpendicular to the magnetic orientation, a method of retaining processing strains, and a method of performing quick heating and cooling. However, these methods are not very effective in increasing the magnetic resistance, and therefore the teeth coupling portions are not turned into nonmagnetic bodies. Therefore, a leakage flux remains, resulting in deterioration of the motor characteristics such as reduction of motor torque.

### SUMMARY OF THE INVENTION

The invention provides a stator for a motor, which has favorable magnetic characteristics, and a method for manufacturing the same, which facilitates fitting assembly of a ring-shaped teeth member and a ring-shaped yoke member.

According to a feature of an example of the invention, there is provided a method for manufacturing a stator for a motor, including a ring-shaped teeth member having a plurality of teeth and teeth coupling portions, and a ring-shaped yoke member having a plurality of teeth engaged portions, the method including an assembly step in which the teeth are engaged with the teeth engaged portions by pressing an inner peripheral portion of the ring-shaped teeth member radially outward and plastically deforming the teeth coupling portions, thereby fitting the ring-shaped teeth member and the ring-shaped yoke member together.

According to another feature of an example of the invention, the method includes a demagnetization step in which at least part of each of the teeth coupling portions of the ring-shaped teeth member is demagnetized by melting the at least part of the teeth coupling portion by application of heat and supplying a nonmagnetic element to the at least part of the teeth coupling portion, the demagnetization step being performed before the assembly step.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a plan view showing a stator for a motor according to an embodiment of the invention;
FIG. 2 is a plan view showing a ring-shaped teeth member of the stator for a motor;
FIG. 3 is a plan view showing a ring-shaped yoke member of the stator for a motor;
FIG. 4 is a view showing a first heat melting method for demagnetizing a teeth coupling portion of the stator;
FIG. 5 is a view showing a second heat melting method for demagnetizing the teeth coupling portion of the stator;
FIG. 6 is a sectional view schematically showing a third heat melting method for demagnetizing a non-contact portion of the stator, which is not in contact with a permanent magnet;
FIG. 7 is a perspective view schematically showing the third heat melting method for demagnetizing the non-contact portion that is not contact with the permanent magnet;
FIG. 8 is a flowchart that describes a method for manufacturing the stator; and
FIG. 9 is a graph showing a change in the magnetic permeability from the melting center to each melting end portion in the teeth coupling portion of the stator.

### DETAILED DESCRIPTION OF EMBODIMENTS

Hereinafter, embodiments of the invention will be described with reference to the accompanying drawings.

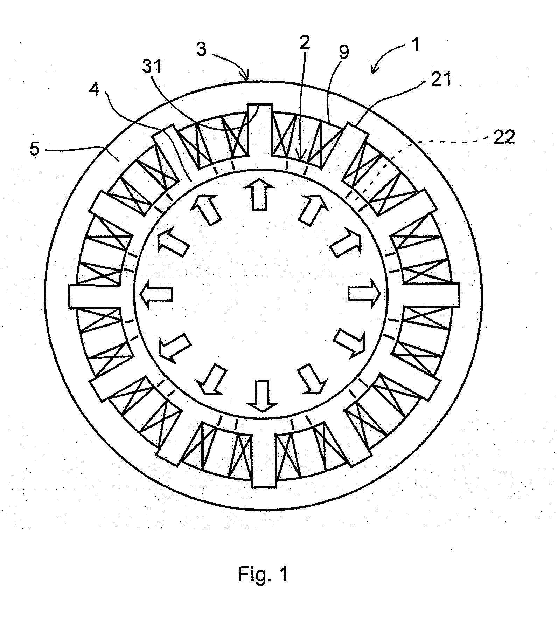

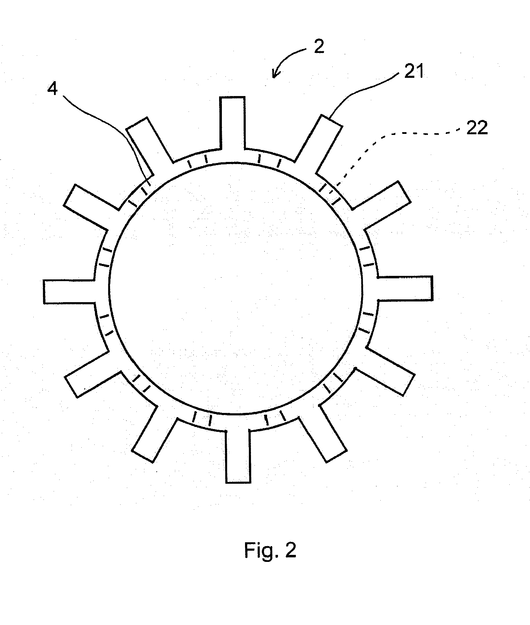

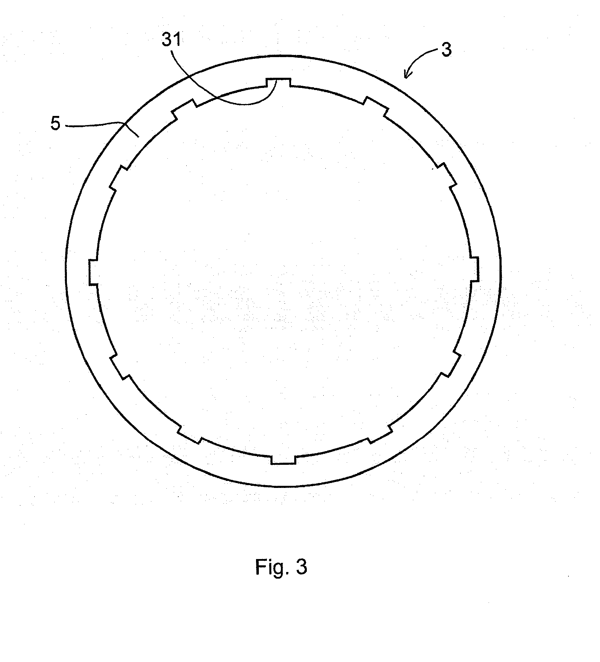

As a stator for a motor, a stator for an inner rotor motor will be described with the reference to FIG. 1 to FIG. 3. In the following description, "radial direction" and "axial direction" denote the radial direction and the axial direction of the stator, respectively.

As shown FIG. 1 to FIG. 3, a stator 1 includes a ring-shaped teeth member 2, a ring-shaped yoke member 3, and coils 9.

The ring-shaped teeth member 2 is formed by laminating a plurality of thin ring-shaped ferromagnetic plates 4 formed of, for example, magnetic steel plates. The ring-shaped teeth member 2 has a plurality (twelve, in the present embodiment) generally T-shaped teeth 21. The teeth 21 are arranged at equal angular intervals such that bottom side of each T-shape faces radially outward. The radially inner ends of the adjacent teeth 21 are coupled to each other via teeth coupling portions 22. The coils 9 are wound around the teeth 21.

The ring-shaped yoke member 3 is formed by laminating a plurality of thin ring-shaped ferromagnetic plates 5 formed of magnetic steel plates that are made of the same material as the ring-shaped teeth member 2. The ring-shaped yoke member 3 has twelve teeth engaged portions 31 in its inner peripheral portion. The twelve teeth 21 of the ring-shaped teeth member 2 are engaged with the respective twelve teeth engaged portions 31.

The stator 1 is formed of the ring-shaped teeth member 2 and the ring-shaped yoke member 3 that are prepared separately. As will be described later in detail, the ring-shaped teeth member 2 and the ring-shaped yoke member 3 are fitted together by pressing the inner peripheral portion of the ring-shaped teeth member 2 radially outward to plastically deform the teeth coupling portions 22 and engaging the teeth 21 with the teeth engaged portions 31.

Each of the teeth coupling portions 22 between teeth 21 of the ring-shaped teeth member 2 is demagnetized by supplying a nonmagnetic element (manganese, nickel, or the like) to the teeth coupling portion 22 while melting the teeth coupling portion 22 by the application of heat. The teeth coupling portions 22 are demagnetized by supplying the nonmagnetic element while changing the mixture ratio of the nonmagnetic element such that the magnetic permeability moderately changes at the boundaries between the teeth coupling portions 22 and the teeth 21, i.e., the boundaries between a ferromagnetic phase and a nonmagnetic phase.

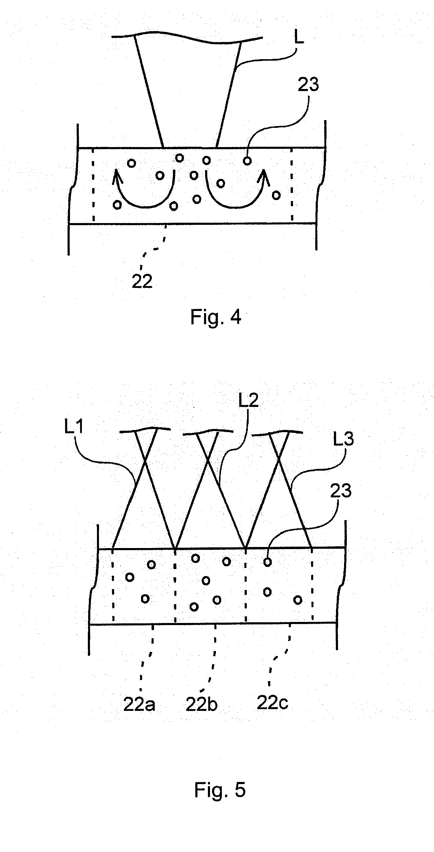

As shown in, for example, FIG. 4, the circumferential center of the inner peripheral portion of each teeth coupling portion 22 is irradiated with a laser L to melt the circumferential center of the inner peripheral portion of the teeth coupling portion 22 by the application of heat, and a supplied nonmagnetic element 23 is agitated as shown by arrows in FIG. 4 to demagnetize the teeth coupling portion 22. Alternatively, as shown in FIG. 5, each teeth coupling portion 22 is split into three regions in the circumferential direction. While irradiating split regions 22a, 22b, 22c with lasers L1, L2, L3 and melting the split regions 22a, 22b, 22c by the application of heat, a larger amount of the nonmagnetic element 23 is supplied to the center split region 22b, and a smaller amount of the nonmagnetic element 23 is supplied to the split regions 22a, 22c on respective sides of the center split region 22b to demagnetize the teeth coupling portion 22. Note that, the number of split regions is not limited to three as long as there are at least two split regions.

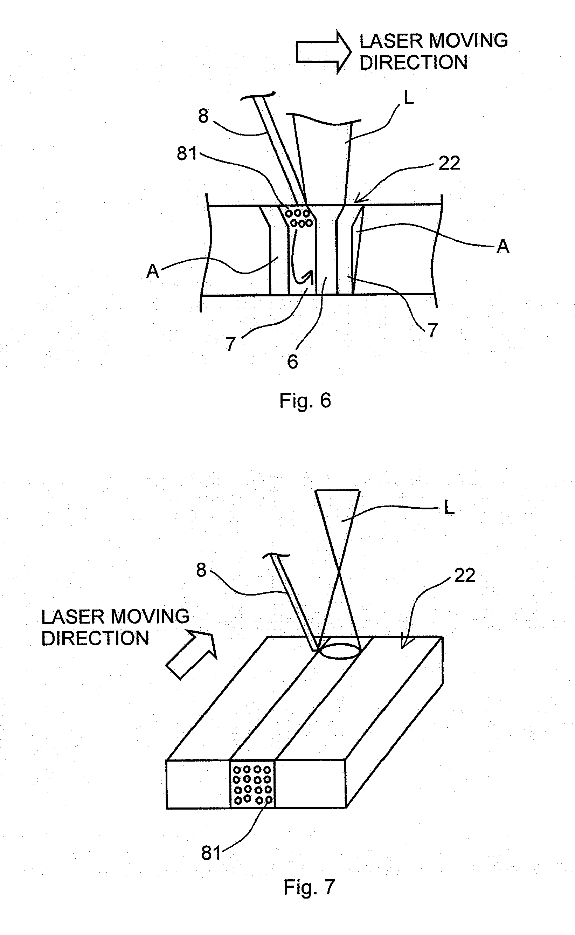

Further alternatively, each teeth coupling portion 22 may be heated by high-density energy to form a keyhole, a molten pool may be formed around the keyhole, and the nonmagnetic element may be disposed in the molten pool to demagnetize the teeth coupling portion 22. A demagnetization process for demagnetizing the teeth coupling portion 22 will be described with reference to FIG. 6 and FIG. 7. The demagnetization process includes a keyhole forming step and an element disposing step. The keyhole forming step is a step of forming a keyhole 6 by irradiating each teeth coupling portion 22 with the laser L from the inner peripheral portion of the teeth coupling portion 22 (the inner peripheral portion of the ring-shaped teeth member 2). The keyhole 6 is a round hole that is formed through irradiation of the teeth coupling portion 22 with the laser L, and that extends through the teeth coupling portion 22 which is irradiated with the laser L, from the inner peripheral portion to the outer peripheral portion. When the keyhole 6 is formed, vaporized metal is generated, and a molten pool 7 is formed around the keyhole 6 by a metal vaporization pressure and a base material surface tension.

In the element disposing step, a nonmagnetic element 81 is disposed in the molten pool 7 around the keyhole 6. A wire 8 made of the nonmagnetic element 81 (nonmagnetic element, for example, manganese or nickel) is disposed near a laser L irradiating position on the inner peripheral portion of the teeth coupling portion 22. Then, the laser L irradiating position is moved relative to the inner peripheral portion of the teeth coupling portion 22, and the wire 8 is also moved relative to the inner peripheral portion of the teeth coupling portion 22 in accordance with the movement of the laser L irradiating position. When the laser L irradiating position moves relative to the inner peripheral portion of the teeth coupling portion 22, the keyhole 6 at a preceding irradiating position is filled with the molten teeth coupling portion 22. A heat-affected portion A affected by heat is formed around the molten pool 7.

The wire 8 contacts the molten pool 7 and is molten, and the molten wire 8 (i.e. the nonmagnetic element 81) is mixed and diffused into the molten pool 7. In the molten pool 7, convection (see an arrow in FIG. 6) is easily generated, and hence the nonmagnetic element 81 is diffused in the radial direction of the teeth coupling portion 22, and supplied from the inner peripheral portion to the outer peripheral portion of the teeth coupling portion 22. In this way, the teeth coupling portion 22 is alloyed and changed into a nonmagnetic body.

Note that in the technical field of welding, a keyhole is a deep small hole formed during welding such as laser welding, electron beam welding or arc welding. When multiple members are welded together, a keyhole is formed in one of the members to weld the one member to the other member. Specifically, when a heat such as a laser is applied to the surface of the one member, the keyhole is formed in the one member to weld the back surface side of the one member to the front surface side of the other member. However, the keyhole 6 formed in the demagnetization process differs from the keyhole used in the keyhole welding for welding multiple layers together, in that the keyhole 6 is formed in each single-layered teeth coupling portion 22 to magnetically reform the teeth coupling portion 22 evenly from the inner peripheral portion to the outer peripheral portion thereof, regardless of the thickness of the teeth coupling portion 22. As described above, the technical field of the welding is completely different from the technical field of magnetic reforming.

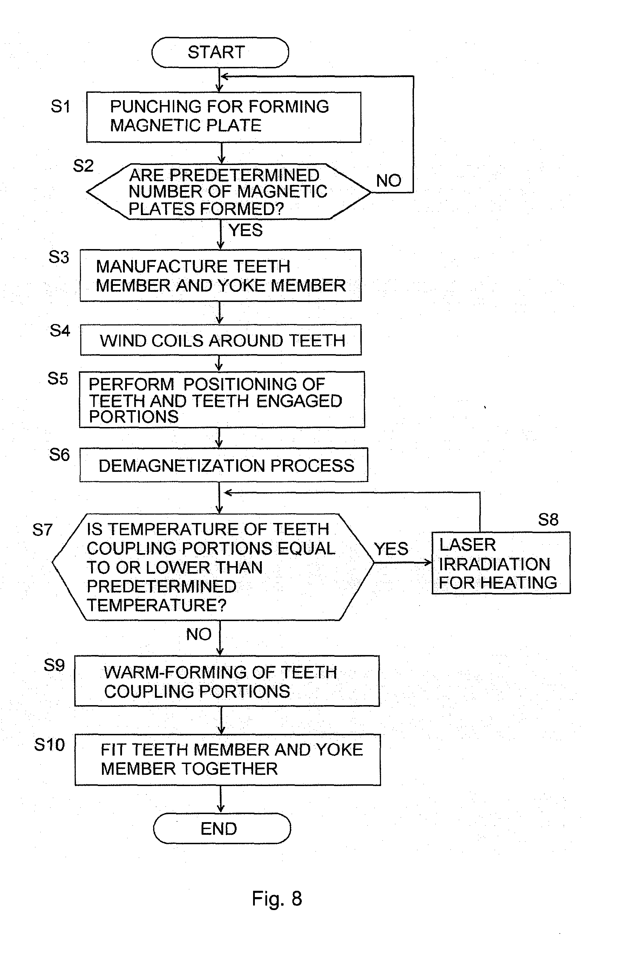

A method for manufacturing the stator 1 will be described with reference to a flowchart in FIG. 8. As shown in FIG. 8, for example, a magnetic steel plate is set on a press device, and punched into a shape of the ferromagnetic plate 4 or 5 (step S 1). The punched ferromagnetic plate 4 or 5 drops down to be accommodated in a die. When a predetermined number of the ferromagnetic plates 4 or 5 are punched and laminated in the die (step S2), the laminated ferromagnetic plates 4 or 5 are pressed in the axial direction. In this way, the ring-shaped teeth member 2 and the ring-shaped yoke member 3 are manufactured (step S3).

After the coils 9 are wound around the teeth 21 of the ring-shaped teeth member 2 (step S4: an example of "coil winding step" in the invention), the ring-shaped teeth member 2 is fitted into the ring-shaped yoke member 3, and positioning is performed such that the distal ends of the teeth 21 are aligned with the openings of the teeth engaged portions 31 (step S5: an example of "positioning step" in the invention). The teeth coupling portions 22 are demagnetized by supplying manganese to the teeth coupling portions 22 while changing the mixture ratio of the manganese and while irradiating the coupling portions 22 with the laser L to melt the coupling portions 22 with the application of heat (step S6: an example of "heating step" and "demagnetization step" in the invention). The temperature of the teeth coupling portions 22 at this time has reached, for example, 1600°C.

After the teeth coupling portions 22 are demagnetized, it is determined whether the temperature of the teeth coupling portion 22 is equal to or lower than a predetermined temperature within a range, for example, from 500°C to 700°C (step S7). When the temperature of the teeth coupling portion 22 is equal to or lower than the predetermined temperature, the teeth coupling portion 22 is irradiated with the laser L to be heated (step S8). When the temperature of the teeth coupling portion 22 is higher than the predetermined temperature, a warm-forming is performed, that is, the inner peripheral portion of the ring-shaped teeth member 2 is pressed radially outward to plastically deform the teeth coupling portions 22 (step S9). Then, the teeth 21 are fitted into the teeth engaged portions 31 to fit the ring-shaped teeth member 2 and the ring-shaped yoke member 3 together (step S10: steps S7 to S10 are an example of "assembly step" in the invention). In this way, the stator 1 is obtained.

Note that, the ring-shaped teeth member 2 and the ring-shaped yoke member 3 may be fitted together by pressing the inner peripheral portion of the ring-shaped teeth member 2 radially outward and plastically deforming the teeth coupling portion 22 so that the teeth 21 are engaged with the teeth engaged portions 31, without performing the above-described heating step and demagnetization step. Alternatively, only the heating step may be performed without performing the demagnetization step, and the ring-shaped teeth member 2 and the ring-shaped yoke member 3 may be fitted together by pressing the inner peripheral portion of the ring-shaped teeth member 2 radially outward and plastically deforming the teeth coupling portion 22 so that the teeth 21 are engaged with the teeth engaged portions 31.

The stator 1 is formed of the ring-shaped teeth member 2 and the ring-shaped yoke member 3 that separately prepared. Therefore, it is possible to easily wind the coils 9 around the teeth 21 of the ring-shaped teeth member 2. In addition, the inner peripheral portion of the ring-shaped teeth member 2 is pressed radially outward to plastically deform the teeth coupling portions 22. Therefore, it is possible to easily fit the ring-shaped teeth member 2 to the ring-shaped yoke member 3 through fitting assembly.

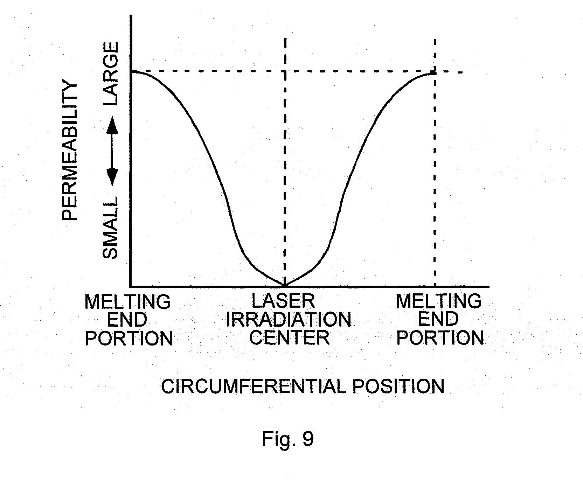

Because the teeth coupling portions 22 are heated, the teeth coupling portions 22 are plastically deformed easily. Each teeth coupling portion 22 is demagnetized by supplying the nonmagnetic element to the teeth coupling portion 22 while melting the teeth coupling portion 22 by the application of heat. In the teeth coupling portion 22, the nonmagnetic element forms the alloy, and demagnetization advances, but the whole teeth coupling portion 22 is not evenly demagnetized. As shown in FIG. 9, from the melting center of the teeth coupling portion 22 toward each melting end portion thereof in the circumferential direction, the magnetic permeability gradually increases, i.e., the material of the teeth coupling portion 22 moderately changes from the nonmagnetic material to the ferromagnetic material. Therefore, generation of cogging torque during the rotation of the motor is suppressed.

Each teeth coupling portion 22 is demagnetized by supplying the nonmagnetic element while changing the mixture ratio of the nonmagnetic element in the circumferential direction. Specifically, each teeth coupling portion 22 is demagnetized by melting the center of the teeth coupling portion 22 by the application of heat and agitating the nonmagnetic element. In the teeth coupling portion 22, because the heat melting center portion has a high temperature, the nonmagnetic element forms the alloy, and the demagnetization advances. However, in the teeth coupling portion 22, as the distance from the heat melting center increases, the temperature decreases, and hence the nonmagnetic element is less likely to form the alloy. As a result, at a portion of the teeth coupling portion 22, which is near the boundary with the teeth 21, the material of the teeth coupling portion 22 is moderately changed from the nonmagnetic material to the ferromagnetic material.

Also, each teeth coupling portion 22 is split into three regions, and demagnetized by supplying the nonmagnetic element to the split regions 22a, 22b, 22c while melting the split regions 22a, 22b, 22c by the application of heat. As a result, at the portion of the teeth coupling portion 22, which is near the boundary with the teeth 21, the material of the teeth coupling portion 22 is changed from the nonmagnetic material to the ferromagnetic material reliably moderately. Also, at least part of each teeth coupling portion 22 of the ring-shaped teeth member 2 is irradiated with high-density energy and heated to form the keyhole 6 by the metal vaporization pressure and the base material surface tension, and the nonmagnetic element 81 disposed in the molten pool 7 around the keyhole 6 is formed into a solid solution alloy to demagnetize the teeth coupling portion 22. Therefore, heat deformation of the ring-shaped teeth member 2 is suppressed.

In the above-described embodiment, the wire 8 made of the nonmagnetic element 81 is disposed near the laser L irradiating position on the inner peripheral portion of the teeth coupling portion 22, and the nonmagnetic element 81 is supplied to the molten pool 7 formed around the keyhole 6 to perform the demagnetization process. Alternatively, the demagnetization process may be performed in the following method. That is, pellets made of the nonmagnetic element 81 are placed on the inner peripheral portion of the teeth coupling portion 22, the pellets made of the nonmagnetic element 81 are driven into the inner peripheral portion of the teeth coupling portion 22 through press working, and the pellets made of the nonmagnetic element 81 are irradiated with the laser L to perform the demagnetization process. Further alternatively, powder, coarse particles or thin films made of the nonmagnetic element 81 are placed on the inner peripheral portion of the teeth coupling portion 22, and the powder, the coarse particles, or the thin films made of the nonmagnetic element 81 are irradiated with the laser L to perform the demagnetization process. In addition, means for melting the teeth coupling portion 22 may be any means as long as high-density energy is emitted. In place of the laser L, for example, electron beams may be used.
Teeth coupling portions (22) of a ring-shaped teeth member (2) are demagnetized by supplying a nonmagnetic element to the teeth coupling portions (22) while melting the teeth coupling portion (22) by application of heat. Then, an inner peripheral portion of the ring-shaped teeth member (2) is pressed radially outward. Therefore, it is possible to plastically deform the teeth coupling portions (22) easily, so that the ring-shaped teeth member (2) and a ring-shaped yoke member (3) are easily fitted together. Accordingly, there is provided a method for manufacturing a stator for a motor, in which the amount of leakage flux is reduced and which has favorable magnetic characteristics.

## Claims

1. A method for manufacturing a stator for a motor,
the stator including
a ring-shaped teeth member that has a plurality of teeth which extend radially outward and around which coils are wound, and teeth coupling portions that couple radially inner ends of the adjacent teeth to each other, and
a ring-shaped yoke member and that has a plurality of teeth engaged portions formed in an inner peripheral portion of the ring-shaped yoke member, the teeth of the ring-shaped teeth member being engageable with the teeth engaged portions,
the method **characterized by** comprising:
a coil winding step in which the coils are wound around the teeth of the ring-shaped teeth member;
a positioning step in which the ring-shaped teeth member is fitted into the ring-shaped yoke member and the teeth are aligned with the teeth engaged portions; and
an assembly step in which the teeth are engaged with the teeth engaged portions by pressing an inner peripheral portion of the ring-shaped teeth member radially outward and plastically deforming the teeth coupling portions, thereby fitting the ring-shaped teeth member and the ring-shaped yoke member together.

2. The method for manufacturing the stator for a motor according to claim 1, further comprising:
a heating step in which the teeth coupling portions are heated, and which is performed before the assembly step.

3. The method for manufacturing the stator for a motor according to claim 1, further comprising:
a demagnetization step in which at least part of each of the teeth coupling portions of the ring-shaped teeth member is demagnetized by melting the at least part of the teeth coupling portion by application of heat and supplying a nonmagnetic element to the at least part of the teeth coupling portion, the demagnetization step being performed before the assembly step.

4. The method for manufacturing the stator for a motor according to claim 3, wherein
in the demagnetization step, the at least part of the teeth coupling portion is demagnetized by supplying the nonmagnetic element to the at least part of the teeth coupling portion while changing a mixture ratio of the nonmagnetic element in a circumferential direction.

5. The method for manufacturing the stator for a motor according to claim 3, wherein
in the demagnetization step, the at least part of the teeth coupling portion is demagnetized by melting a center of the teeth coupling portion by application of heat and agitating the nonmagnetic element.

6. The method for manufacturing the stator for a motor according to claim 3, wherein
in the demagnetization step, each of the teeth coupling portions is split into at least two regions, and the at least part of the teeth coupling portion is demagnetized by melting the split regions by application of heat and supplying the nonmagnetic element to the split regions.

7. The method for manufacturing the stator for a motor according to claims 1 or 2, further comprising:
a demagnetization step in which at least part of each of the teeth coupling portions of the ring-shaped teeth member is demagnetized by heating the at least part of the teeth coupling portion with high-density energy to form a keyhole, forming a molten pool around the keyhole, and disposing a nonmagnetic element in the molten pool.

8. A stator for a motor, the stator including
a ring-shaped teeth member that has a plurality of teeth which extend radially outward and around which coils are wound, and teeth coupling portions that couple radially inner ends of the adjacent teeth to each other, and
a ring-shaped yoke member that is formed in a ring shape, and that has a plurality of teeth engaged portions formed in an inner peripheral portion of the ring-shaped yoke member, the teeth of the ring-shaped teeth member being engageable with the teeth engaged portions,
the stator **characterized in that** at least part of each of the teeth coupling portions of the ring-shaped teeth member is demagnetized by melting the at least part of the teeth coupling portion by application of heat and supplying a nonmagnetic element to the at least part of the teeth coupling portion, and the teeth are engaged with the teeth engaged portions by pressing an inner peripheral portion of the ring-shaped teeth member radially outward and plastically deforming the teeth coupling portions, thereby fitting the ring-shaped teeth member and the ring-shaped yoke member together.
